# EUROPÄISCHE PATENTSCHRIFT

(11) **EP 1 798 528 B1**
(45) Veröffentlichungstag und Bekanntmachung des Hinweises auf die Patenterteilung: **08.08.2012**
(21) Anmeldenummer: 05027636.9
(22) Anmeldetag: 16.12.2005
(51) Int. Cl.: G01F 1/66

(54) **Durchflussmengenmesseinrichtung für fluide Medien**
Flow rate measuring apparatus for fluid media
Dispositif de mesure de débit destiné à des fluides

(43) Veröffentlichungstag der Anmeldung: 20.06.2007
(73) Patentinhaber: Körner, Hans-Holger, 23758 Oldenburg/Holstein (DE)
(72) Erfinder: Körner, Hans-Holger, 23758 Oldenburg/Holstein (DE)
(74) Vertreter: Glawe, Delfs, Moll

(56) Entgegenhaltungen:
- EP-A- 1 493 998
- DE-U1- 20 107 894

## Beschreibung

Die Erfindung betrifft eine Durchflussmengenmesseinrichtung für fluide Medien.

Durchflussmengenmesseinrichtungen für fluide Medien, die Ultraschallwellen zur Durchflussmessung verwenden, sind aus dem Stand der Technik, beispielsweise DE 201 07 894 U1, EP 1 493 998 A2 oder der dänischen Gebrauchsmusterschrift 38 808, bekannt. Das Gerät enthält eine von dem Medium durchströmte Messstrecke, an deren gegenüberliegenden Enden Umlenkspiegel vorgesehen sind. Über die Umlenkspiegel werden die Schallwellen des Ultraschallwandlers in die Messstrecke umgelenkt. In dem Gerät der dänischen Gebrauchsmusterschrift 38 808 werden die Umlenkspiegel durch mehrteilige Reflektoreinsätze gehalten, die rechtwinklig zur durchströmten Messtrecke in Bohrungen der Gehäuseinnenwand des Durchflussmengenmessers montiert sind.

Der konstruktive Aufwand für Herstellung und Montage der Reflektoreinsätze für die Umlenkspiegel ist aufwendig.

Der vorliegenden Erfindung liegt die Aufgabe zugrunde, eine Durchflussmengenmesseinrichtung der im Oberbegriff es Anspruchs 1 genannten Art zu schaffen, die einfache Bauweise mit leichter Handhabbarkeit verbindet.

Die Erfindung löst diese Aufgabe durch eine Durchflussmengenmesseinrichtung gemäß Anspruch 1. Bevorzugte Ausführungsformen der Erfindung finden sich in den abhängigen Ansprüchen. Danach weist der Umlenkspiegel einen Tragearm auf, der zwischen der Gehäuseinnenwand und dem Messrohr gehaltert ist und der Tragearm ist zum Einstecken in einen Zwischenraum zwischen dem Messrohr und der Gehäuseinnenwand ausgebildet. Der eingesteckte Tragearm ist dann vorzugsweise parallel zum Messrohr bzw. der durchströmten Messstrecke orientiert.

Der Tragearm kann jede Form aufweisen, die ein Tragen des Umlenkspiegel ermöglicht. Der Tragearm kann beispielsweise als Stift oder auch flächig, in Form einer Tragerarmplatte mit einer vorder- und Rückseite ausgebildet sein. Im letzten Fall liegen im montierten zustand der Vorderseite die Außenwand des Messrohrs und der Rückseite die Gehäuseinnenwand gegenüber.

Der Winkel zwischen dem Tragearm und dem Umlenkspiegel hängt im Wesentlichen von der Positionierung des Ultraschallwandlers in Bezug auf den Umlenkspiegel und die Messtrecke ab. Bei rechtwinkliger Reflexion der Schallwellen des Ultraschallwandlers durch die Vorderseite des Umlenkspiegels in die Messtrecke beträgt der Winkel zwischen dem Tragearm und der Vorderseite des Umlenkspiegels vorzugsweise etwa 135°, wenn der Tragearm parallel zum Messrohr bzw. der durchströmten Messstrecke orientiert ist. Im Allgemeinen wird es erforderlich sein, dass der Winkel zwischen dem Tragearm und der Vorderseite des Umlenkspiegels 45°-150°, vorzugsweise 90°-135°, beträgt.

Ferner sind nach einem bevorzugten Merkmal der Erfindung der Umlenkspiegel und sein Tragearm einstückig ausgebildet, Dies vereinfacht zum einen wesentlich die Konstruktion der Durchflussmengenmesseinrichtung und ermöglicht zum anderen den Umlenkspiegel und den Tragearm in einem Arbeitsgang herzustellen. Die Erfindung hat erkannt, dass bestimmta Materialien, z.B. Edelstahlblech, hervorragend sowohl als Umlenkspiegel, als auch als Tragearm geeignet sind. So können Umlenkspiegel und Tragearm einstückig aus Edelstahlblech herausgestanzt werden, bevor anschließend durch Polieren der Vorderseite des Umlenkspiegels deren Reflexionseigenschaften verbessert werden und der Tragearm gegenüber dem Umlenkspiegel abgewinkelt wird.

Je länger die Strecke ist, mit der der Tragearm zwischen dem Messrohr und der Gehäuseinnenwand gehaltert ist, umso besser ist der Tragearm gegen Positionsänderungen gesichert. Aus diesem Grund wird der Tragearm gemäß einer bevorzugten Ausführungsform der Erfindung über eine Länge von mindestens 1,0, bevorzugt 1,5, besonders bevorzugt 2,0 der Weite des Durchmessers des Messrohrs zwischen der Gehäuseinnenwand und dem Messrohr gehaltert.

Um das Messrohr in dem Gehäuse zu halten und zu fixieren, weist das Messrohr erfindungsgemäß an seiner Außenwand Abstandshalter auf, die in unmittelbaren Kontakt zu der Gehäuseinnenwand stehen. Diese Abstandshalter können zum Beispiel rippen- oder nasenartig ausgebildet sein und in Axialrillen oder eine Riffelung an der Gehäuseinnenwand eingreifen.

Eine Positionierung und Fixierung des Messrohrs in dem Gehäuse kann ebenfalls dadurch bewirkt werden, dass das Messrohr über einen Teil des Umfangs einen Fortsetzungsbereich mit Aufnahme für einen Kopfbereich des Ultraschallwandlers aufweist. Der die Schallwellen abstrahlende Kopfbereich des in das Gehäuse integrierten Ultraschallwandlers durchbricht dabei sowohl die Gehäuseinnenwand, als auch den Fortsetzungsbereich des Messrohrs. Dadurch wird die Position das Messrohrs und des Umlenkspiegels, der von dem zwischen dem Messrohr und der Gehäuseinnenwand gehalterten Tragearm gehalten wird, gegenüber dem Ultraschallwandler fixiert. Messungenauigkeiten oder falsche Messergebnisse, bedingt durch eine unerwünschte Positionsänderung des Umlenkspiegels in Bezug auf den Ultraschallwandler im Laufe der Benutzung, können dadurch vermieden werden.

Zur Minderung von Messungenauigkeiten begründenden Verwirbelungen des an den Umlenkspiegeln vorbeiströmenden fluiden Mediums können Strömungsberuhiger verwendet werden. So kann beispielsweise die Rückseite des Umlenkspiegels durch entsprechende Aufsätze verwirbelungsberuhigend ausgestaltet werden.

Ausführungsbeispiele werden nachfolgend anhand von Zeichnungen veranschaulicht. Es zeigen:
- Fig. 1: einen unterbrochenen Schnitt längst durch das Gehäuse in den Endbereichen des Messrohrs;
- Fig. 2: einen Teilausschnitt längst durch das Gehäuse in dem Endbereich des Messrohrs einer weiteren erfindungsgemäßen Ausführungsform;
- Fig. 3: einen Schnitt quer durch das Gehäuse;
- Fig. 4: einen Schnitt quer durch das Gehäuse entlang einer Linie IV-IV aus Fig. 1 ;
- Fig. 5: Tragearm und Umlenkspiegel (einstückig);
- Fig. 6: Tragearm und Umlenkspiegel (einstückig) mit Aufsatz;
- Fig. 7: einen Teilausschnitt längst durch das Gehäuse in dem Endbereich des Messrohrs einer weiteren erfindungsgemäßen Ausführungsform.

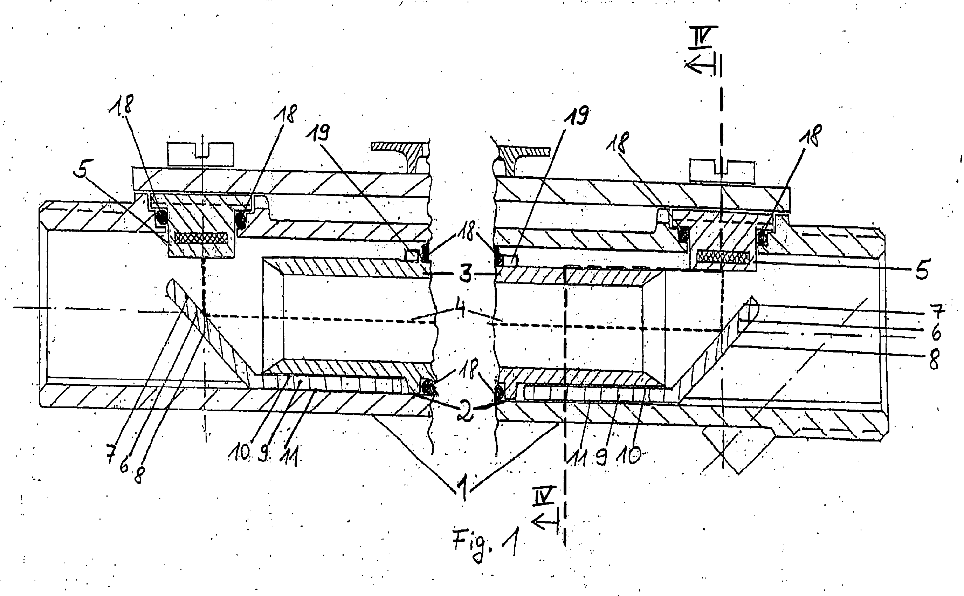

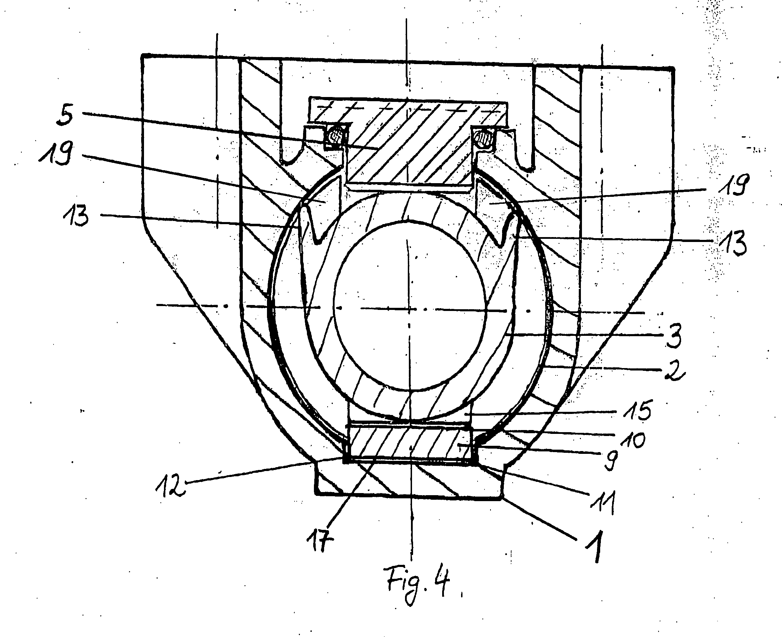

Fig. 1 und 4 zeigen schematisch den Aufbau einer Durchflussmengenmesseinrichtung für fluide Medien. Die Durchflussmengenmesseinrichtung weist ein Gehäuse 1 auf, deren Innenraum durch eine Gehäuseinnenwand 2 begrenzt ist. In dem Innenraum ist ein Messrohr 3 angeordnet. In der Nähe beider Enden des Messrohrs 3 weist das Gehäuse 1 Aufnahmen für die Ultraschallwandler 5 auf, die mit ihrem Kopfbereich die Gehäuseinnenwand durchbrechen. Dichtungen 18, beispielsweise aus dem Stand der Technik bekannte Quadringe, dichten die zwischen dem Ultraschallwandler 5 und dem Gehäuse 1 vorhandenen Zwischenräume ab. Dichtungen 18 dichten ebenfalls das aus zwei Teilen bestehende Messrohr 3 im Kontaktbereich beider Teile ab und sind durch einen umlaufenden Bund 19 am Messrohr 3 gesichert. Wie insbesondere in Fig. 4 zu sehen, ist der umlaufende Bund 19 im dem Ultraschallwandler 5 gegenüberliegenden Bereich unterbrochen um bei Bedarf ein Herausziehen des Messrohrs 3 am Ultraschallwandler 5 vorbei zu ermöglichen. Dem Ultraschallwandler gegenüberliegend ist ein Umlenkspiegel 6 mit einer Vorderseite 7 und einer Rückseite 8 angeordnet. Über die Vorderseiten 7 der Umlenkspiegel 6 werden die Schallwellen der Ultraschallwandler 5 in die Messstrecke 4 umgeleitet. Der Umlenkspiegel 6 wird von einem Tragearm 9 gehalten. Der Tragearm 9 hat eine Vorderseite 10 und einer Rückseite 11. Der Umlenkspiegel 6 ist mit dem Tragearm 9 einstückig ausgebildet. Der Tragearm 9, der gegenüber der Vorderseite 7 des Umlenkspiegels 6 einen Winkel von etwa 135° aufweist, wird in einem Zwischenraum zwischen Gehäuseinnenwand 2 und Messrohr 3 gehalten. Dabei liegen sich jeweils die Vorderseite 10 und die Außenwand des Messrohrs 3 sowie die Rückseite 11 und die Gehäuseinnenwand 2 gegenüber.

Die in den Fig.1 und 4 dargestellte Ausführungsform ist auf Grund der einfachen Bauweise leicht zu handhaben, warten und reparieren. So können Messrohr 3, Tragearm 9 mit dem Umlenkspiegel 6 als Einheit oder einzeln durch die Seitenöffnung des Gehäuses 1 und am Ultraschallwandler 5 vorbei entnommen werden. Ein wesentlicher Vorteil dieser Bauweise besteht darin, dass damit der aufwendige Ausbau der Ultraschallwandler 5 vermieden werden kann um auf das Messrohr 3 und die Umlenkspiegel 6 zugreifen zu können.

In Fig. 4 ist des weiteren gezeigt, dass der Tragearm 9 in einer Führung 12, gebildet aus einer Nut mit einer Nutgrundfläche 17 in der Gehäuseinnenwand 2 einerseits, und auf der gegenüberliegenden Seite des Tragerarms 9 durch ein an der Außenwand des Messrohrs 3 angeordnetes Sattelstück 15 mit ebener Unterseitenfläche, geführt wird. An diesen Flächen liegt der Tragearm 9 mit seiner Vorderseite 10 und seiner Rückseite 11 bindend an.

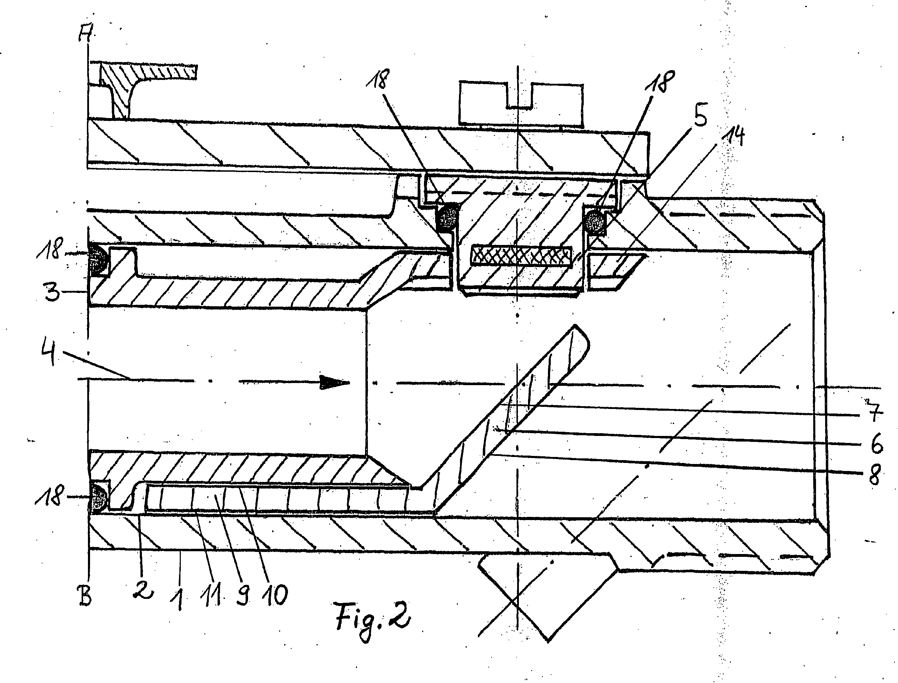

In einer weiteren Ausführungsform gemäß Fig. 2 weist das Messrohr 3 einen Fortsetzungsbereich 14 auf, der sich über einen Teil des Umfangs des Messrohrs 3 am Rohrende erstreckt und eine Aufnahme für den die Schallwellen abstrahlenden Kopfbereich des Ultraschallwandlers 5 aufweist.

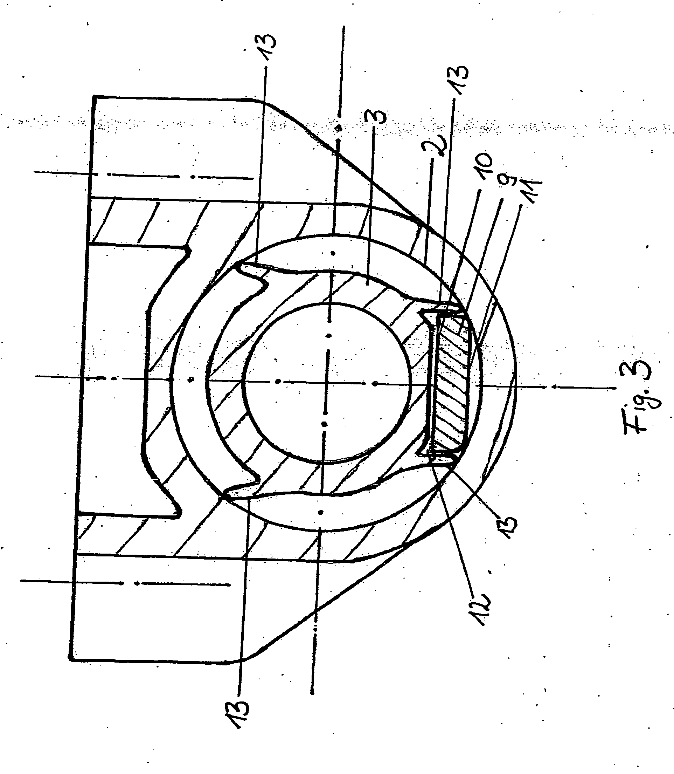

Das Messrohr 3 weist ferner Abstandshalter 13 (s. Fig. 3 und 4) auf, die in (nicht dargestellte) Axialrillen der Gehäuseinnenwand 2 eingreifen können. In Fig. 3 liegt der Vorderseite 10 des Tragearms 9 eine Abflachung an der Au-βenwand des Messrohrs 3 gegenüber. Das heißt, die sich gegenüberliegenden Flächen liegen aneinander an und sind kongruent im Sinne der vorliegende Erfindung. Gleichzeitig wird der Tragearm 9 erfindungsgemäß in der durch die beiden Abstandshalter 13 des Messrohrs 3 gebildeten Führung geführt. Die Rückseite 11 des Tragearms 9 ist an den Seitenkanten abgerundet und weist damit eine größere Auflagefläche auf der Fläche der Gehäuseinnenwand 2 auf. Dadurch wird die Positionierung und Fixierung des Tragerarms zwischen Messrohr 3 und Gehäuseinnenwand 2 unterstützt.

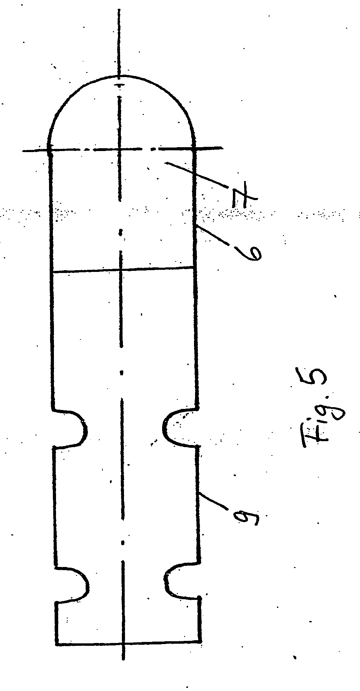

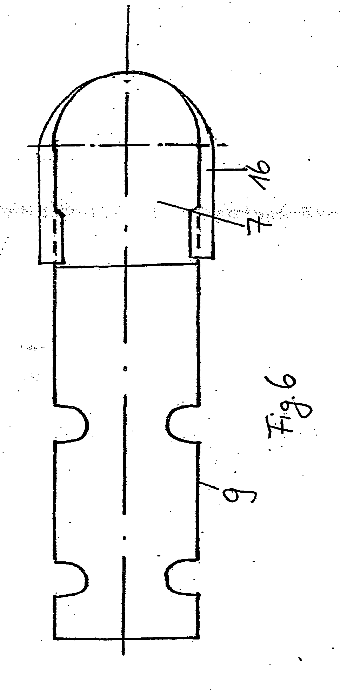

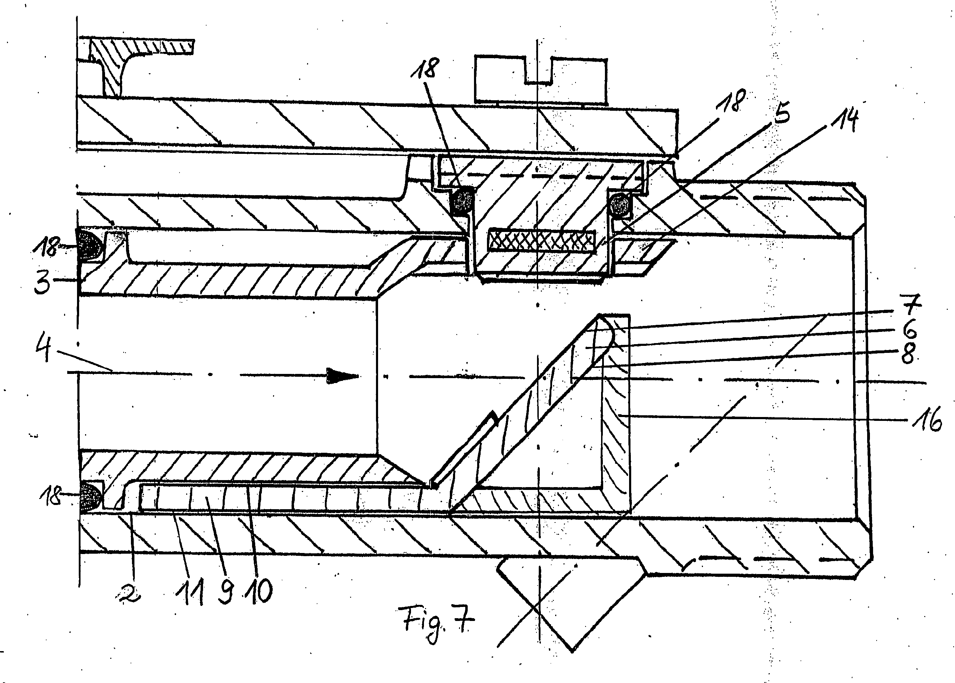

Fig. 5 und 6 zeigen eine Detaildarstellung des Umlenkspiegels 6 mit Tragearm 9. Der Tragearm 9 weist an seinen Längsseiten halbkreisförmige Aufnahmen auf, in die korrespondierende Bereiche der Außenwand des Messrohr 3 (nicht dargestellt) eingreifen können. Damit wird eine feste Verbindung, quasi eine Verzahnung zwischen Tragearm 9 und Messrohr 3 ermöglicht. Der Umlenkspiegel 6 weist in Bezug auf den Tragearm 9 in Bereich der durchgezogenen Linie einen Winkel von 135° auf, der in der Draufsicht nicht erkennbar ist. Dem Umlenkspiegel 6 kann auf seiner Rückseite 8 ein Strömungsberuhiger 16 in Form eines schuhartigen Aufsatzes für eine wirbelarme Strömungslenkung aufgesetzt sein, dessen die Vorderseite 7 des Umlenkspiegels 6 umgreifende Randbereiche in Fig. 6 dargestellt sind. Die Verwendung des schuhartigen Aufsatzes 16 als integraler Bestandteil der in Fig. 2 dargestellten Ausführungsform ist in Fig. 7 gezeigt.

## Patentansprüche

1. Durchflussmengenmesseinrichtung für fluide Medien mit einem Gehäuse (1), dessen Inneres durch eine Gehäuseinnenwand (2) begrenzt ist, einem innerhalb des Gehäuses (1) angeordneten Messrohr (3), das eine Messstrecke (4) für eine Laufzeitmessung bestimmt, und einer Ultraachallmesseinrichtung umfassend mindestens einen Ultraschallwandler (5) zur Abstrahlung von Ultraschallwellen in das Gehäuseinnere, mindestens einen Umlenkspiegel (6) an der Messtrecke (4) mit einer Vorderseite (7), mittels dem die Ultraschallwellen des Ultraschallwandlers (5) in die Messtrecke (4) umgelenkt werden, und einer der Vorderseite gegenüberliegenden Rückseite (8), wobei der Umlenkspiegel (6) einen Tragearm (9) aufweist, der zwischen der Gehäuseinnenwand (2) und dem Messrohr (3) gehaltert ist,
- wobei der Tragearm (9) zum Einstecken in einen Zwischenraum zwischen dem Messrohr (3) und der Gehäuseinnenwand (2) ausgebildet ist,
- **dadurch gekennzeichnet, dass** das Messrohr (3) an seiner Außenwand Abstandshalter (13) aufweist, die in unmittelbaren Kontakt zu der Gehäuseinnenwand (2) stehen, wodurch das Messrohr (3) innerhalb des Gehäuses (1) gehalten wird und
- die Abstandshalter (13) des Messrohrs (3), zumindest teilweise, als Führung für den Tragearm (9) fungieren.

2. Durchflussmengenmesseinrichtung nach Anspruch 1, **dadurch gekennzeichnet, dass** der Tragearm (9) parallel zum Messrohr (3) orientiert ist.

3. Durchflussmengenmesseinrichtung nach einem der vorhergehenden Ansprüche, **dadurch gekennzeichnet, dass** der Winkel zwischen dem Tragearm (9) und der Vorderseite (7) des Umlenkspiegels (6) 45°-150°, vorzugsweise 90°-135°, besonders bevorzugt 135° beträgt.

4. Durchflussmengenmesseinrichtung nach einem der vorherigen Ansprüche, **dadurch gekennzeichnet, dass** der Tragearm (9) flächig ausgebildet ist mit einer Vorderseite (10) und eine Rückseite (11), wobei die Vorderseite (10) der Außenwand des Messrohrs (3) und die Rückseite (11) der Gehäuseinnenwand (2) gegenüberliegen.

5. Durchtlussmengen.messeinrichtung nach einem der vorherigen Ansprüche, **dadurch gekennzeichnet, dass** der Umlenkspiegel (6) und sein Tragearm (9) einstückig ausgebildet sind.

6. Durchflussmengenmesseinrichtung nach einem der vorherigen Ansprüche, **dadurch gekennzeichnet, dass** der Tragearm (9) über eine Länge von mindestens 1,0, bevorzugt 1,5, besonders bevorzugt 2,0 der Weite des Messrohrs (3) zwischen der Gehäuseinnenwand (2) und dem Messrohr (3) gehaltert ist.

7. Durchflussmengenmesseinrichtung nach einem der Ansprüche 1 bis 8, **dadurch gekennzeichnet, dass** der Tragearm (9) im Bereich der Aufnahme eine zur Gehäuseinnenwand (2) und/oder Außenwand des Messrohrs (3) kongruente Form aufweist und in diesem Bereich an der Gehäuseinnenwand (2) und/oder Außenwand des Messrohrs (3) anliegt.

8. Durchflussmengenmesseinrichtung nach einem der vorhergehenden Ansprüche, **dadurch gekennzeichnet, dass** das Messrohr (3) über einen Teil des Umfangs einen Fortsetzungsbereich (14) mit Aufnahme für einen Teilbereich des Ultraschallwandlers (5) aufweist.

9. Durchflussmengenmesseinrichtung nach einem der vorhergehenden Ansprüche, **dadurch gekennzeichnet, dass** ein Strömungsberuhiger (16) für eine wirbelarme Strömungslenkung des fluiden Mediums im Bereich der Umlenkspiegel (5) vorgesehen ist.

10. Durchflussmengenmesseinrichtung nach Anspruch 11, **dadurch gekennzeichnet**, das der Strömungsberuhiger (16) an der Rückseite (8) der Umlenkspiegel (6) angeordnet ist.

## Claims

1. Flow-rate measuring device for fluid media, having a housing (1) whose interior is bound by a housing inner wall (2), a measurement tube (3) that is arranged inside the housing (1) and determines a measurement section (4) for a propagation-time measurement, and an ultrasonic measuring device comprising at least one ultrasonic transducer (5) for emitting ultrasonic waves into the housing interior, at least one deflecting mirror (6) at the measurement section (4) having a front side (7) by means of which the ultrasonic waves of the ultrasonic transducer (5) are deflected into the measurement section (4), and a rear side (8) opposite the front side, wherein the deflecting mirror (6) has a support arm (9) which is held between the housing inner wall (2) and the measurement tube (3),
- wherein the support arm (9) is configured for insertion into an intermediate space between the measurement tube (3) and the housing inner wall (2),
- **characterized in that** the measurement tube (3) has at its outer wall spacers (13) which are in direct contact with the housing inner wall (2), as a result of which the measurement tube (3) is held inside the housing (1) and
- the spacers (13) of the measurement tube (3) function, at least partially, as a guide for the support arm (9).

2. Flow-rate measuring device according to Claim 1, **characterized in that** the support arm (9) is oriented parallel to the measurement tube (3).

3. Flow-rate measuring device according to one of the preceding claims, **characterized in that** the angle between the support arm (9) and the front side (7) of the deflecting mirror (6) is 45°-150°, preferably 90°-135°, particularly preferably 135°.

4. Flow-rate measuring device according to one of the preceding claims, **characterized in that** the support arm (9) has a planar configuration with a front side (10) and a rear side (11), wherein the front side (10) is opposite the outer wall of the measurement tube (3) and the rear side (11) is opposite the housing inner wall (2).

5. Flow-rate measuring device according to one of the preceding claims, **characterized in that** the deflecting mirror (6) and its support arm (9) are of unipartite configuration.

6. Flow-rate measuring device according to one of the preceding claims, **characterized in that** the support arm (9) is held between the housing inner wall (2) and the measurement tube (3) over a length of at least 1.0, preferably, 1.5, particularly preferably 2.0, times the width of the measurement tube (3).

7. Flow-rate measuring device according to one of Claims 1 to 6, **characterized in that** the support arm (9) has, in the region of the receiving means, a shape which is congruent with the housing inner wall (2) and/or outer wall of the measurement tube (3) and, in this region, bears against the housing inner wall (2) and/or outer wall of the measurement tube (3).

8. Flow-rate measuring device according to one of the preceding claims, **characterized in that** the measurement tube (3) has, over part of the circumference, a continuing region (14) with a receiving means for a partial region of the ultrasonic transducer (5).

9. Flow-rate measuring device according to one of the preceding claims, **characterized in that** a flow stabilizer (16) for a low-eddy flow deflection of the fluid medium is provided in the region of the deflecting mirrors (6).

10. Flow-rate measuring device according to Claim 9, **characterized in that** the flow stabilizer (16) is arranged on the rear side (8) of the deflecting mirrors (6).

## Revendications

1. Dispositif de mesure du débit destiné à des milieux fluides comprenant un boîtier (1), dont l'intérieur est délimité par une paroi interne de boîtier (2), un tube de mesure (3) disposé à l'intérieur du boîtier (1) et qui détermine une section de mesure (4) pour une mesure de temps de parcours, et un dispositif de mesure à ultrasons comportant au moins un transducteur ultrasonore (5) servant à exposer l'intérieur du boîtier à des ondes ultrasonores, au moins un miroir de déviation (6) au niveau de la section de mesure (4), au moyen duquel les ondes ultrasonores du transducteur ultrasonore (5) sont déviées dans la section de mesure (4), et qui est doté d'un côté avant (7) et d'un côté arrière (8) faisant face au côté avant, dans lequel le miroir de déviation (6) présente un bras de support (9) fixé entre la paroi interne de boîtier (2) et le tube de mesure (3),
- dans lequel le bras de support (9) est réalisé pour être inséré dans un espace intermédiaire entre le tube de mesure (3) et la paroi interne de boîtier (2),
**caractérisé en ce que**
- le tube de mesure (3) présente sur sa paroi extérieure des écarteurs (13), qui se trouvent en contact direct avec la paroi interne de boîtier (2), ce qui permet de maintenir le tube de mesure (3) à l'intérieur du boîtier (1), et
- les écarteurs (13) du tube de mesure (3) font office au moins en partie de dispositif de guidage pour le bras de support (9).

2. Dispositif de mesure de débit selon la revendication 1, **caractérisé en ce que** le bras de support (9) est orienté de manière parallèle par rapport au tube de mesure (3).

3. Dispositif de mesure de débit selon l'une quelconque des revendications précédentes, **caractérisé en ce que** l'angle entre le bras de support (9) et le côté avant (7) du miroir de déviation (6) est compris entre 45° et 150°, de préférence entre 90° et 135°, de manière particulièrement préférée est de 135°.

4. Dispositif de mesure de débit selon l'une quelconque des revendications précédentes, **caractérisé en ce que** le bras de support (9) est réalisé de manière plate avec un côté avant (10) et un côté arrière (11), sachant que le côté avant (10) de la paroi extérieure du tube de mesure (3) et le côté arrière (11) de la paroi interne de boîtier (2) se font face.

5. Dispositif de mesure de débit selon l'une quelconque des revendications précédentes, **caractérisé en ce que** le miroir de déviation (6) et son bras de support (9) sont réalisés d'un seul tenant.

6. Dispositif de mesure de débit selon l'une quelconque des revendications précédentes, **caractérisé en ce que** le bras de support (9) est fixé sur une longueur d'au moins 1,0, de préférence de 1,5, de manière particulièrement préférée de 2,0 de la largeur du tube de mesure (3) entre la paroi interne de boîtier (2) et le tube de mesure (3).

7. Dispositif de mesure de débit selon l'une quelconque des revendications 1 à 6, **caractérisé en ce que** le bras de support (9) présente dans la zone d'accueil une forme coïncidant à la paroi interne de boîtier (2) et/ou à la paroi extérieure du tube de mesure (3) et repose dans cette zone au niveau de la paroi interne de boîtier (2) et/ou au niveau de la paroi extérieure du tube de mesure (3).

8. Dispositif de mesure de débit selon l'une quelconque des revendications précédentes, **caractérisé en ce que** le tube de mesure (3) présente sur une partie de la périphérie une zone de prolongement (14) dotée d'un logement pour une zone partielle du transducteur ultrasonore (5).

9. Dispositif de mesure de débit selon l'une quelconque des revendications précédentes, **caractérisé en ce qu'**un stabilisateur d'écoulement (16), destiné à une commande d'écoulement à tourbillonnement réduit du milieu fluide, est prévu dans la zone du miroir de déviation (5).

10. Dispositif de mesure de débit selon la revendication 9, **caractérisé en ce que** le stabilisateur d'écoulement (16) est disposé au niveau du côté arrière (8) du miroir de déviation (6).
